# FASCICULE DE BREVET EUROPEEN

(11) **EP 1 120 030 B1**
(45) Date de publication et mention de la délivrance du brevet: **06.10.2004**
(21) Numéro de dépôt: 01400188.7
(22) Date de dépôt: 24.01.2001
(51) Int. Cl.: A01G 13/02, C09K 17/52

(54) **Feuille de paillage et son procédé de fabrication**
Mulchfolie und Verfahren zu ihrer Herstellung
Mulching sheet and process for its manufacturing

(30) Priorité: 26.01.2000 FR 0001002
(43) Date de publication de la demande: 01.08.2001
(73) Titulaire: ARJO WIGGINS, 92130 Issy Les Moulineaux (FR)
(72) Inventeur: Debaux, Bernard, 94210 La Varenne St Hilaire (FR); Soumagnas, Jean-Patrick, 38500 Voiron (FR)

(56) Documents cités:
- US-A- 4 580 960
- US-A- 4 782 626

## Description

La présente invention concerne une feuille de paillage ainsi que son procédé de préparation.

On connaît depuis fort longtemps, dans le milieu agricole, l'avantage du paillage pour la culture des produits horticoles qui permet entre autre de contrôler la pousse des graines et des plants, la température du sol, l'humidité du sol et d'éviter la pousse des mauvaises herbes grâce en particulier à l'opacité apportée et qui bloque la photosynthèse. Pour réaliser ce paillage, autrefois on utilisait de la paille qui a ensuite été remplacée par des films en plastique tels que les films en polyéthylène colorés en noir. Comme ces films sont étanches à l'eau, ils comportent des perforations qui ont été faites pour permettre l'arrosage et le drainage du sol néanmoins le drainage n'est pas uniforme et il arrive qu'il se forme des poches d'eau sur le film qui favorisent le développement des bactéries et nuisent à la pousse des plants. De plus ces films ne sont pas biodégradables et ne peuvent donc pas être enfouis dans le sol après leur utilisation.

Plus récemment on a proposé d'utiliser des papiers revêtus d'une couche noire, en particulier des papiers crêpés ou des composites plastique/papier. Dans le brevet US 4782626, on a décrit une feuille de paillage qui comprend une feuille de papier crêpé, recouverte sur ses deux faces d'une couche à base d'une dispersion de chlorure de polyvinylidène. Cette couche déposée sur au moins l'une des faces du papier comporte du noir de carbone pour donner de l'opacité. Ce papier peut comporter des zones de perforations selon un procédé assez complexe pour faciliter le drainage du sol.

L'un des inconvénients de ce papier est que le drainage du sol n'est pas uniforme. Un autre inconvénient est qu'il est tout noir et ne se fond pas bien dans le paysage agricole. Un autre inconvénient est que lorqu'on dépose la couche noire sur la feuille on salit la machine à papier et qu'il faut la nettoyer pour fabriquer d'autres qualités de papiers.

L'invention propose de fournir une nouvelle feuille pour paillage qui ne présenterait pas les inconvénients de l'art antérieur. En particulier le but de l'invention est de fournir une feuille qui soit biodégradable et qui permette une pousse uniforme des cultures.

L'invention fournit une feuille de paillage qui se caractérise par le fait qu'elle comporte un jet d'ouate contrecollé par une colle de contrecollage opaque à un second jet d'une autre feuille biodégradable.

De préférence l'invention se caractérise par le fait que ledit second jet est aussi un jet d'ouate.

On entend par jet d'ouate, un jet formé sur une machine à papier à partir d'une suspension en milieu aqueux de fibres de cellulose comportant un agent de résistance humide et éventuellement quelques additifs comme notamment un colorant. En particulier, ces fibres sont des fibres provenant du recyclage de papiers ou cartons. Ce jet de fibres est crêpé à sec, en général après son séchage. Ce jet a une structure relativement ouverte et peut être de faible grammage (de l'ordre de 10 g/m²).

L'invention est remarquable par le fait qu'on utilise des jets d'ouate qui ont des propriétés de porosité et d'hydrophilie efficaces pour le paillage. En effet une telle feuille présente notamment l'avantage, par rapport aux produits de paillage de l'art antérieur, de fournir une feuille microporeuse permettant une uniformité de l'irrigation par arrosage des cultures et du sol. De plus la colle de contrecollage apporte une certaine barrière à l'évaporation de l'eau du sol qui favorise donc la rétention d'eau au niveau du sol. On a observé que tout ceci entraîne notamment un dévelopement plus uniforme des produits cultivés et donc une moins grande dispersion des calibres.

De préférence la feuille de paillage se caractérise en ce que lesdits jets ont un grammage compris entre 10 et 50 g/m², en particulier entre 15 et 35 g/m². Selon un cas particulier de l'invention lesdits jets ont des grammages différents.

Plus particulièrement la feuille de paillage se caractérise par le fait qu'elle a un grammage inférieur ou égal à 100 g/m².

Un autre avantage est que l'on peut régler le grammage de la feuille de paillage. Il est avantageux que le grammage soit le plus faible possible car alors on peut enrouler une plus grande surface de feuille pour constituer une bobine d'un poids donné. Il faut néanmoins que le grammage soit suffisant pour que la feuille ait une résistance mécanique suffisante. En général la feuille de paillage est déposée sur le sol par déroulage d'une bobine placée sur un dérouleur à l'arrière d'un tracteur, la feuille se déroulant au fur et à mesure que le tracteur avance. Des petites roues placées judicieusement au niveau du dérouleur permettent d'appliquer la feuille sur le sol et ensuite d'enfouir les bords de ladite feuille dans des sillons creusés par des socs placés aussi au niveau du dérouleur.

De préférence, la feuille se caractérise en ce que lesdits jets présentent un allongement à la rupture de 20 à 30 % selon le sens marche de la machine à papier, mesure faite selon la norme internationale ISO 1924-2/07-1995 (paragraphe 10.5). Un bon allongement à la rupture des jets constituant la feuille de paillage permet de donner à la feuille une bonne drapabilité lorsqu'on la dépose sur le sol de culture.

Un autre avantage est que les jets peuvent être colorés et peuvent l'être de la même couleur ou de couleurs différentes. Cette coloration contribue à l'opacité de la feuille de paillage. Ils peuvent être colorés dans une couleur s'harmonisant avec la culture. En particulier la feuille selon l'invention se caractérise par le fait que lesdits jets sont colorés, en particulier de couleur marron.

Un autre avantage est que la biodégradabilité de la feuille peut être réglée en jouant sur la colle de contrecollage par le choix relatif de la nature des composants de ladite colle et leurs quantités respectives ainsi que sur la quantité déposée de ladite colle. Les composants peuvent être biodégradables plus ou moins rapidement. En général on règle la biodégradabilité de la feuille de paillage en fonction de la durée de la culture c'est-à-dire de sorte que la feuille se dégrade lorsque la pousse des plants est terminée. La feuille peut être aussi enfouie dans le sol.

De façon générale cette colle de contrecollage est réalisée en milieu aqueux et comprend un liant choisi parmi les polymères utilisés sous forme de dispersion aqueuse et un agent opacifiant.

De préférence, la feuille selon l'invention se caractérise par le fait que ladite colle de contrecollage comprend:
- 5 à 25 % d'un agent opacifiant, en particulier le noir de carbone,
- 15 à 85 % d'un liant polymère utilisé sous forme de dispersion aqueuse stabilisée, en particulier choisi parmi les copolymères styrène-butadiène, styrène-butadiène carboxylé, styrène-acrylique, les polymères acryliques,
- 0 à 25 % d'un autre liant organique, en particulier choisi parmi l'amidon, l'alcool polyvinylique, la caséine, les alginates, les dérivés de cellulose, la gélatine,
- 0 à 70 % d'autres charges, en particulier des charges minérales choisies parmi le carbonate de calcium, le kaolin et le talc,
- 0 à 25 % d'un agent épaississant,
les pourcentages étant exprimés en poids sec par rapport au poids sec total de la colle, la somme des pourcentages faisant 100.

Cette colle peut comporter un agent antimousse et des agents dispersants si nécessaire.

La colle de contrecollage est déposée à raison de 4 à 40 g/m², de préférence de 5 à 20 g/m² en poids sec.

La colle de contrecollage peut aussi comporter des engrais, des herbicides, en particulier des herbicides sélectifs. Un avantage d'une telle feuille est le fait qu'elle peut présenter des caractéristiques différentielles selon ses faces. En particulier, elle peut présenter une capacité thermique différentielle en jouant sur l'absorption de la colle de contrecollage par les différents jets la composant. La face la plus foncée, donc absorbant le plus de chaleur, est mise en contact avec l'extérieur afin de favoriser la pousse des plants, et la face la moins foncée est mise en contact avec le sol car elle absorbe moins la chaleur du sol. A l'inverse, si on est dans une saison très chaude, on peut souhaiter préserver les plants de la chaleur et dans ce cas on mettra la face la plus foncée vers le sol.

L'invention fournit aussi un procédé de fabrication de ladite feuille de paillage.

L'un des procédés de fabrication de ladite feuille de paillage se caractérise par le fait que :
- on déroule un premier jet d'ouate,
- on enduit ce jet d'ouate avec ladite colle de contrecollage , puis
- on applique ledit second jet sur la colle, puis
- on sèche la feuille de paillage ainsi obtenue.

Un autre procédé de fabrication de ladite feuille de paillage se caractérise par le fait que :
- on déroule un premier jet d'ouate,
- on enduit ledit jet avec ladite colle de contrecollage, puis
- on fait passer le jet ainsi enduit dans un tunnel de séchage,
- on applique ledit second jet sur la colle chaude pour former la feuille de paillage.

Un autre procédé de fabrication de ladite feuille de paillage se caractérise par le fait que :
- on déroule un premier jet d'ouate,
- on enduit ledit jet avec ladite colle de contrecollage puis on le sèche,
- puis on bobine le jet enduit refroidi,
- on déroule et fait passer le jet ainsi enduit sur un cylindre chauffant,
- on applique ledit second jet sur la colle chaude pour former la feuille de paillage.

Inversement dans ces procédés, on peut enduire ledit second jet avec la colle de contrecollage puis appliquer le jet d'ouate.

Selon un cas particulier de l'invention, l'un ou l'autre de cesdits procédés se caractérise par le fait que ladite colle de contrecollage est appliquée par sérigraphie. Il est en effet avantageux d'utiliser la sérigraphie car la colle peut être utilisée sous forme de composition assez visqueuse et permet une application sans traverser les jets d'ouate qui sont très poreux.

Ce procédé de fabrication de la feuille de paillage se caractérise en particulier par le fait que le dispositif de sérigraphie comporte au moins deux cadres rotatifs. En effet afin d'améliorer les caractéristiques de la feuille de paillage, on peut être amené à déposer la colle à l'aide de deux (voire plus) cadres rotatifs. Par exemple le premier cadre rotatif est gravé de telle sorte qu'il permette de renforcer la résistance à la déchirure en sens travers de la feuille, ceci peut être réalisé si le motif de gravure est du type d'une grille perpendiculaire au sens marche du premier jet qui permette de déposer des traits de colle dans le sens travers du jet; le second cadre rotatif est gravé de telle sorte qu'il permette d'obtenir une opacité homogène, le motif de gravure permettant de déposer de façon uniforme la colle.

L'invention sera mieux comprise à l'aide des exemples non limitatifs suivants :

### EXEMPLE 1 :

Sur une machine à papier à table plate, on réalise un jet d'ouate de fibres de cellulose à partir d'une suspension en milieu aqueux de fibres de cellulose recyclées contenant 0,2 % en poids sec d'un agent de résistance humide et aussi un colorant marron. Après formation, ce jet est séché, crêpé à sec puis bobiné. Il a un grammage moyen de 30 g/m², déterminé selon la norme internationale ISO 536. Il a une porosité Guerley de 0,5 s , cette donnée ayant été déterminée selon la norme NF-ISO 5636-5/03-1998 sur une liasse de 8 feuilles car les feuilles sont très poreuses, et établie pour une feuille en divisant la mesure par 8. Il a un allongement à la rupture de 25 % dans le sens marche de la machine à papier, determiné selon la norme internationale ISO 1924-2/07-1995 (paragraphe 10.5). Le jet est de couleur marron, plus précisément chamois. Son épaisseur est 105 µm, déterminée selon la norme internationale ISO 534.

Comme second jet on utilise le même jet d'ouate.

Sur une contrecolleuse, on déroule le premier jet, on l'enduit par sérigraphie de la colle de contrecollage décrite ci-dessous, à raison de 10 g/m² en poids sec, puis juste après on applique sur cette colle, le second jet d'ouate. On presse et sèche l'ensemble à 100-120° C environ.

La colle de contrecollage a été réalisée en milieu aqueux par dispersion des divers composants.

Dans 10 g de colle, tout étant exprimé en poids sec, on a :
- 2,5 g d'un liant copolymère styrène- butadiène qui a été utilisé sous forme d'une dispersion aqueuse stabilisée (latex),
- 1,5 g d'amidon ,
- 1 g de noir de carbone,
- 4,5 g de pigments de carbonate de calcium,
- 0,5 g d'un agent épaississant.

La feuille ainsi obtenue a une opacité de 99 % , mesurée selon la norme internationale ISO 2471/1983. Elle a une porosité GUERLEY de 3s, mesurée dans les mêmes conditions que précédemment. Les deux faces de la feuille sont d'aspect différents c'est-à-dire que la face du jet le premier enduit apparaît marron et noire mais plus noire que l'autre face comportant le second jet d'ouate.

La feuille de paillage est testée pour la culture des salades sous serre en comparaison avec un film de polyéthylène noir pour paillage. La face la plus noire de la feuille est placée vers l'extérieur (côté opposé au sol).

Le poids moyen des salades obtenues avec le film plastique est de 456 g et le poids des salades cultivées avec la feuille selon l'invention est de 460 g. Ceci montre que la feuille de paillage selon l'invention est aussi efficace voire un peu plus qu'un film de polyéthylène de paillage.

De plus le coefficient de variation de poids pour vingt salades dans le premier cas est de 12,1 % alors que dans le second cas relatif à l'invention, il n'est que de 9,5 %. Ceci montre que la croissance des salades et donc leur calibre est plus uniforme avec une feuille de paillage selon l'invention.

De plus, la feuille selon l'invention se biodégrade à la fin de la culture c'est-à-dire au bout de six semaines.

### EXEMPLE 2 :

On réalise des jets d'ouate comme dans l'exemple 1 et on utilise une même colle de contrecollage mais on procède à un contrecollage différent pour fabriquer la feuille de paillage. Après avoir enduit le premier jet de colle, on passe ce jet enduit dans un tunnel de séchage à 120 °C et à la sortie dudit tunnel on applique le second jet d'ouate. L'avantage de ce procédé est que le film de colle a eu la possibilité de bien se former et de se répartir de façon bien homogène, on conserve ainsi un meilleur allongement à la rupture.

### EXEMPLE 3 :

On utilise des jets d'ouate réalisés comme dans l'exemple 1 mais on utilise une colle de contrecollage différente qui ne comporte pas de charges minérales. Cette colle a la composition suivante, pour 10 g de colle, tout étant exprimé en poids sec :
- 6,87 g d'un liant copolymère styrène-butadiène qui a été utilisé sous forme d'une dispersion aqueuse stabilisée (latex),
- 1,88 g de noir de carbone,
- 1,25 g d'un agent épaississant.

On fabrique la feuille de paillage selon le procédé d'encollage suivant : le premier jet d'ouate est enduit de cette colle par sérigraphie, en deux temps à l'aide de deux cadres rotatifs, le premier cadre permet d'appliquer la colle sous forme de traits perpendiculaires au sens marche du jet et le second cadre permet d'appliquer la colle de façon uniforme sur toute la surface du jet. Puis on applique le second jet pour former la feuille de paillage. On presse et sèche l'ensemble vers 100-120 °C.

## Revendications

1. Feuille de paillage **caractérisée par le fait qu'**elle comporte un jet d'ouate contrecollé par une colle de contrecollage opaque à un second jet d'une autre feuille biodégradable.

2. Feuille de paillage selon la revendication 1, **caractérisée par le fait que** ledit second jet est un jet d'ouate.

3. Feuille de paillage selon l'une des revendications 1 à 2, **caractérisée par le fait que** lesdits jets ont un grammage compris entre 10 et 50 g/m², en particulier entre 15 et 35 g/m².

4. Feuille selon l'une des revendications 1 à 3, **caractérisée par le fait que** lesdits jets ont des grammages différents.

5. Feuille selon l'une des revendications 1 à 4, **caractérisée par le fait qu'**elle a un grammage inférieur ou égal à 100 g/m².

6. Feuille selon l'une des revendications 1 à 5, **caractérisée par le fait que** lesdits jets présentent un allongement à la rupture de 20 à 30 % selon le sens marche de la machine à papier, mesure faite selon la norme internationale ISO 1924-2/07-1995 paragraphe 10.5.

7. Feuille selon l'une des revendications 1 à 6, **caractérisée par le fait que** lesdits jets sont colorés, en particulier de couleur marron.

8. Feuille selon l'une des revendications 1 à 7, **caractérisée par le fait que** ladite colle de contrecollage comprend :
- 5 à 25 % d'un agent opacifiant, en particulier le noir de carbone, en poids sec par rapport au poids total de la colle,
- 15 à 85% d'un liant polymère utilisé sous forme de dispersion aqueuse stabilisée, en particulier choisi parmi les copolymères styrène-butadiène, styrène-butadiène carboxylé, styrène-acrylique, les polymères acryliques,
- 0 à 25 % d'un liant organique, en particulier choisi parmi l'amidon, l'alcool polyvinylique, la caséine, les alginates, les dérivés de cellulose, la gélatine,
- 0 à 70 % d'autres charges, en particulier des charges minérales choisies parmi le carbonate de calcium, le kaolin et le talc,
- 0 à 25 % d'un agent épaississant,
les pourcentages étant exprimés en poids sec par rapport au poids sec total de la colle, la somme des pourcentages faisant 100.

9. Feuille selon l'une des revendications 1 à 8, **caractérisée par le fait que** la colle de contrecollage est déposée à raison de 4 à 40 g/m² en poids sec, de préférence de 5 à 20 g/m².

10. Procédé de fabrication d'une feuille de paillage selon l'une des revendications 1 à 9, **caractérisé par le fait que** :
- on déroule un premier jet d'ouate,
- on enduit ce jet d'ouate avec ladite colle de contrecollage, puis
- on applique ledit second jet sur la colle, puis
- on sèche la feuille de paillage ainsi obtenue.

11. Procédé de fabrication d'une feuille de paillage selon l'une des revendications 1 à 9, **caractérisé par le fait que** :
- on déroule un premier jet d'ouate,
- on enduit ledit jet avec ladite colle de contrecollage, puis
- on fait passer le jet ainsi enduit dans un tunnel de séchage,
- on applique ledit second jet sur la colle chaude pour former la feuille de paillage.

12. Procédé de fabrication d'une feuille de paillage selon l'une des revendications 1 à 9, **caractérisé par le fait que** :
- on déroule un premier jet d'ouate,
- on enduit ledit jet avec ladite colle de contrecollage, puis on le sèche
- puis on bobine le jet enduit refroidi,
- on déroule et fait passer le jet enduit sur un cylindre chauffant,
- on applique ledit second jet sur la colle chaude pour former la feuille de paillage.

13. Procédé de fabrication d'une feuille de paillage selon l'une des revendications 10 à 12, **caractérisé par le fait que** ladite colle de contrecollage est appliquée par sérigraphie.

14. Procédé de fabrication d'une feuille de paillage selon la revendication 13, **caractérisé par le fait que** le dispositif de sérigraphie comporte au moins deux cadres rotatifs.

## Patentansprüche

1. Bodenbedeckungsfolie, **dadurch gekennzeichnet, dass** sie sich zusammensetzt aus einer Faserstoffauflage aus Watte, die mittels lichtundurchlässiger Dispersionskaschierung gegen eine Faserstoffauflage einer weiteren, biologisch abbaubaren Folie geklebt ist.

2. Bodenbedeckungsfolie nach Anspruch 1, **dadurch gekennzeichnet, dass** es sich bei der erwähnten zweiten Faserstoffauflage um eine Auflage aus Watte handelt.

3. Bodenbedeckungsfolie nach einem der Ansprüche 1 bis 2, **dadurch gekennzeichnet, dass** die erwähnten Faserstoffauflagen ein Flächengewicht zwischen 10 und 50 g/m², insbesondere zwischen 15 und 35 g/m² aufweisen.

4. Folie nach einem der Ansprüche 1 bis 3, **dadurch gekennzeichnet, dass** die erwähnten Faserstoffauflagen unterschiedliche Flächengewichte aufweisen.

5. Folie nach einem der Ansprüche 1 bis 4, **dadurch gekennzeichnet, dass** ihr Flächengewicht geringer als oder gleich 100 g/m² ist.

6. Folie nach einem der Ansprüche 1 bis 5, **dadurch gekennzeichnet, dass** die erwähnten Faserstoffauflagen eine Reißdehnung von 20 bis 30 % in Laufrichtung der Papiermaschine aufweisen, wobei die Messung gemäß der internationalen Norm ISO 1924-2/07-1995, Absatz 10.5 vorgenommen wurde.

7. Folie nach einem der Ansprüche 1 bis 6, **dadurch gekennzeichnet, dass** die erwähnten Faserstoffauflagen gefärbt sind, insbesondere braun gefärbt sind.

8. Folie nach einem der Ansprüche 1 bis 7, **dadurch gekennzeichnet, dass** die Dispersionskaschierung sich zusammensetzt aus:
- 5 bis 25 % eines lichtundurchlässig machenden Wirkstoffs, insbesondere Ruß, in Trockengewicht im Verhältnis zum Gesamtgewicht des Klebstoffs,
- 15 bis 85 % eines Polymers als Bindemittel, das in Form einer stabilisierten wässrigen Dispersion genutzt wird, wobei die Auswahl insbesondere aus den Mischpolymeren Polystyrol-Butadien, Carboxyl Polystyrol-Butadien, Acryl-Styrol und den Acrylpolymerisaten getroffen wird,
- 0 bis 25 % eines organischen Bindemittels, wobei die Auswahl insbesondere aus den Komponenten Stärke, Polyvinylalkohol, Casein, Alginat, Zellstoffderivate und Gelatine getroffen wird,
- 0 bis 70 % anderer Streckmittel, wobei die Auswahl insbesondere aus mineralischen Streckmitteln wie Calciumkarbonat, Kaolin und Talkum getroffen wird
- 0 bis 25 % eines Dickungsmittels,
die Prozentsätze beziehen sich auf das Trockengewicht im Verhältnis zum Gesamttrockengewicht des Klebers, die Summe der Prozentsätze beträgt 100.

9. Folie nach einem der Ansprüche 1 bis 8, **dadurch gekennzeichnet, dass** die Dispersionskaschierung in der Größenordnung 4 bis 40 g/m² Trockengewicht, vorzugsweise 5 bis 20 g/m² aufgebracht wird.

10. Herstellungsverfahren für eine Bodenbedeckungsfolie nach einem der Ansprüche 1 bis 9, **dadurch gekennzeichnet, dass**
- eine erste Faserstoffwatteauflage ausgerollt wird,
- diese Auflage mit der erwähnten Dispersionskaschierung bestrichen wird,
- die erwähnte zweite Faserstoffauflage auf der Dispersionskaschierung aufgebracht wird, und
- die derart erlangte Bodenbedeckungsfolie getrocknet wird.

11. Herstellungsverfahren für eine Bodenbedeckungsfolie nach einem der Ansprüche 1 bis 9, **dadurch gekennzeichnet, dass**
- eine erste Faserstoffwatteauflage ausgerollt wird,
- die erwähnte Auflage mit der erwähnten Dispersionskaschierung bestrichen wird,
- die so bestrichene Faserstoffauflage in einen Trockenkanal gebracht wird,
- die zweite Auflage auf den warmen Kleber aufgebracht wird, um so die Bodenbedeckungsfolie zu bilden.

12. Herstellungsverfahren für eine Bodenbedeckungsfolie nach einem der Ansprüche 1 bis 9, **dadurch gekennzeichnet, dass**
- eine erste Faserstoffwatteauflage ausgerollt wird,
- die erwähnte Auflage mit der erwähnten Dispersionskaschierung bestrichen und getrocknet wird,
- die bestrichene, erkaltete Auflage aufgerollt wird,
- die bestrichene Auflage ausgerollt und auf einen Heizzylinder geführt wird,
- die erwähnte zweite Faserstoffauflage auf den warmen Kleber aufgebracht wird, um so die Bodenbedeckungsfolie herzustellen.

13. Herstellungsverfahren für eine Bodenbedeckungsfolie nach einem der Ansprüche 10 bis 12, **dadurch gekennzeichnet, dass** die erwähnte Dispersionskaschierung im Serigraphieverfahren aufgebracht wird.

14. Herstellungsverfahren für eine Bodenbedeckungsfolie nach Anspruch 13, **dadurch gekennzeichnet, dass** die Serigraphieanlage aus mindestens zwei drehbaren Rahmen besteht.

## Claims

1. A mulch sheet **characterized in that** this comprises a tissue layer laminated with an opaque laminating adhesive to a second layer made of another biodegradable sheet.

2. A mulch sheet according to claim 1, **characterized in that** said second layer is a tissue layer.

3. A mulch sheet according to one of claims 1 or 2, **characterized in that** said layers have a weight within the range of 10 to 50 g/m², in particular, between 15 and 35 g/m².

4. A sheet according to one of claims 1 to 3, **characterized in that** said layers have different weights.

5. A sheet according to one of claims 1 to 4, **characterized in that** this has a weight of no more than 100 g/m².

6. A sheet according to one of claims 1 to 5, **characterized in that** said layers have a stretch at breaking point of 20 to 30% in the running direction of the paper-making machine, as measured in accordance with the international standard ISO 1924-2/07-1995, paragraph 10.5.

7. A sheet according to one of claims 1 to 6, **characterized in that** said layers are colored, in particular, colored brown.

8. A sheet according to one of claims 1 to 7, **characterized in that** said lamination adhesive comprises:
- 5 to 25% of an opacifying agent, in particular carbon black, in dry-weight, with respect to the total weight of the adhesive;
- 15 to 85% of a polymer binder, as a stabilized aqueous dispersion, in particular chosen from amongst styrene-butadiene, carboxylated styrene-butadiene and styrene-acrylic copolymers, or acrylic polymers;
- 0 to 25% of an organic binder, in particular chosen from amongst starch, polyvinyl alcohol, casein, alginates, cellulose derivatives and gelatin;
- 0 to 70% of other fillers, in particular, mineral fillers chosen from amongst calcium, kaolin and talc; and
- 0 to 25% of a thickener,
these percentages being dry-weight percentages with respect to the overall dry-weight of the adhesive, and the sum of these percentages being 100.

9. A sheet according to one of claims 1 to 8, **characterized in that** the lamination adhesive is applied at a rate of 4 to 40 g/m², in dry-weight, preferably 5 to 20 g/m^{2.}

10. A method of manufacturing the mulch sheet according to one of claims 1 to 9, **characterized in that**:
- a first tissue layer is unwound;
- this first tissue layer is coated with said lamination adhesive; and then,
- said second layer is applied on the adhesive; and then,
- the mulch sheet obtained in this manner is dried.

11. A method of manufacturing the mulch sheet according to one of claims 1 to 9, **characterized in that**:
- a first tissue layer is unwound;
- said layer is coated with said lamination adhesive; and then,
- the layer coated in this manner is fed through a drying tunnel;
- said second layer is applied on the hot adhesive so as to form the mulch sheet.

12. A method of manufacturing the mulch sheet according to one of claims 1 to 9, **characterized in that**:
- a first tissue layer is unwound;
- said layer is coated with said lamination adhesive, then dried; and then,
- the cooled, coated layer is rolled;
- the coated layer is unwound and fed through a heating cylinder; and
- said second layer is applied on the hot adhesive so as to form the mulch sheet.

13. A method of manufacturing a mulch sheet according to one of claims 10 to 12, **characterized in that** said lamination adhesive is applied by means of silkscreen.

14. A method of manufacturing a mulch sheet according to claim 13, **characterized in that** the silkscreen apparatus comprises at least two rotating screens.
